# EUROPEAN PATENT SPECIFICATION

(11) **EP 1 482 384 B1**
(45) Date of publication and mention of the grant of the patent: **14.10.2009**
(21) Application number: 04012638.5
(22) Date of filing: 27.05.2004
(51) Int. Cl.: G03G 15/00, G03G 21/16, B41J 29/38, H04N 1/00

(54) **Image generating apparatus with power supply control of detachable sheet conveyance units after sleep mode**
Bilderzeugungsapparat mit Kontrolle der Stromversorgung austauschbarer Blattführungseinheiten nach Ruhezustand
Appareil de génération d'images avec contrôle de l'alimentation en courant des unités de transport de feuilles d'impression après mode someil

(30) Priority: 30.05.2003 JP 2003155783; 17.05.2004 JP 2004146907
(43) Date of publication of application: 01.12.2004
(73) Proprietor: CANON KABUSHIKI KAISHA, Ohta-ku Tokyo (JP)
(72) Inventor: Takahashi, Atsuya, Ohta-ku Tokyo (JP)
(74) Representative: TBK-Patent

(56) References cited:
- EP-A- 0 415 441
- DE-A- 10 000 593
- US-A- 6 072 585
- US-A1- 2001 026 698
- PATENT ABSTRACTS OF JAPAN vol. 1997, no. 11, 28 November 1997 (1997-11-28) -& JP 09 190118 A (CANON INC), 22 July 1997 (1997-07-22)

## Description

The present invention relates to an image forming apparatus including at least two detachable sheet conveyance units.

Recently, energy conservation measures have been required worldwide from the viewpoint of environment conservation or energy problems. Thus, it is necessary for an image generating forming apparatus to achieve power savings during image generating operation, and to minimize the power consumption during the standby, that is, during non-operation periods of the image generation.

To achieve the power savings during the standby, the image generating apparatus has a sleep mode. Such a sleep mode is disclosed in Japanese Patent Application Laid-open No. 2001-111732. It turns off the power supply to an actuator and thermal fuser during the sleep mode. In addition, when the image generating apparatus has a detachable option unit, it also turns off the power supply to the detachable option unit during the sleep mode.

Thus, the conventional image generating apparatus has the sleep mode to reduce the power consumption during the standby. Accordingly, it is necessary for the detachable sheet conveyance unit to turn off the power supply during the sleep mode. However, when the detachable sheet conveyance unit turns off the power supply of the detachable sheet conveyance unit or the like as a option unit during the sleep mode, it takes some time to be activated. Because, in generating an image simultaneously with sleep release, it must exchange (communicate) data such as status data with the image generating apparatus in order to check whether it can convey the sheet after being turned on the power supply.When a plurality of detachable option units are connected, the image generating apparatus produces an image after completing the start-up of all the option units.
Therefore, in particular, when a plurality of option units are connected, it occurs a problem of prolonging the first print time period immediately after the sleep release.

The US-A-6 072 585 discloses a printer which includes a print engine control program that minimizes the power consumption of the paper-handling devices to allow for a smaller DC power supply. Some of the paper-handling devices are input paper trays, output paper stackers, and a duplexer, which all preferably contain a microcontroller and an individual electric motor drive. The base printer also contains a microcontroller in the print engine that controls the printer's mechanisms and various subassemblies that are used in the laser electrophotographic printing process. To maintain control of the entire paper path, the print engine sends commands to the paper-handling devices, and these devices send responses to these commands. Most of the printer's paper-handling devices receive their electrical power entirely from the base printer, which is supplied as a DC voltage. The print engine avoids the concurrent running of subsystems in cases where the functionality of the printer is not compromised. These subsystems are instead run sequentially, so their power demands do not overlap, thereby providing a reduced overall power consumption requirement that is being supplied by the printer's DC power supply. Another aspect of the US-A-6 072 585 allows the printer to command either all or only certain individual paper-handling devices to place themselves into a "power saver" mode. Each of the paper-handling devices has at least one electric motor to drive various paper moving mechanisms, and also has at least one paper position detecting sensor. If the printer is relatively inactive, then it can command all of the motor driven mechanisms of the paper-handling options to be powered down, essentially by turning off the one or more motors in the paper-handling device. Furthermore, if the paper positioning sensors comprise optoelectronic sensors, then the light sources in such sensors draw a significant amount of current. These light sources can be turned off in each of the paper-handling devices by a command from the print engine. Of course, once the printer requires the use of a particular paper-handling device, then its paper positioning sensors can be immediately commanded to have their light sources turned back on, and their motor-driven mechanisms also can be immediately turned back on.

Moreover, the DE-A-100 00 593 discloses a method of identifying the location of interchangeable media handling devices relative to one another and relative to an image forming device. A data communication path is provided in parallel data communication with a plurality of media handling devices, and also in data communication with a processor. A power connection path is provided and configured to provide power sequentially to the media handling devices. The media handling devices are initially in a lower power state. Power is provided through the power connection path to the individual media handling devices to change the power state of the media handling devices from the lower power state to an higher power state. The power travels sequentially through the power connection path to each of the media handling devices, and the individual media handling devices send a signal to the processor after they receive power. The processor utilizes the signals received from the media handling devices to identify a relative physical orientation of the media handling devices to one another, and to identify the relative physical orientation of the media handling devices to the image forming device. Prior to document generation and handling, one or more of the devices is provided in a lower power state, with the term "lower power state" indicating that the devices are in a mode other than that utilized for their respective media handling functions. Such mode can correspond to, for example, a suspend or sleep type mode, or a mode wherein no power flows through said one or more of devices. Subsequently, the one or more of devices are converted from the lower power state to a higher power state, with such "higher power state" corresponding to a media handling mode of the devices. The conversion from the lower power state to the higher power state can be accomplished by initially having no power flowing through a line to a plurality of devices, and subsequently allowing power to flow through the line to the plurality of devices. As power flows through a power connection, it will sequentially enter the plurality of devices, and accordingly sequentially convert the plurality of devices from their respective lower power states to higher power states. Such conversion can be referred to as a power-up sequence.

Furthermore, the EP-A-0 415 441 discloses a power supply control subsystem for an image forming apparatus for controlling the operating timing of multiple DC loads according to selected image forming modes. Electric power is supplied from a single DC power source to the plurality of DC loads through corresponding switching devices inserted therebetween. A control circuit staggers the on-timings of the switching devices so that electric power is supplied to the DC loads in a sequentially, predetermined priority order according to a selected image forming mode.

The JP-A-09 190 118 discloses an image forming apparatus with a plurality of paper handling units, wherein a power source is only connected to the unit when needed.

It is an object of the present invention to provide an image forming apparatus capable of implementing quick start-up such as reducing the first print time period immediately after the sleep release.

The present invention provides an image forming apparatus according to claim 1 and a control method of an image forming apparatus according to claim 8.

The above and other objects, effects, features and advantages of the present invention will become more apparent from the following description of embodiments thereof taken in conjunction with the accompanying drawings.
Fig. 1 is a cross-sectional view showing a mechanical configuration of a laser beam printer (LBP) equipped with an option paper feed cassette and a duplexer unit as the detachable sheet conveyance units of an embodiment in accordance with the present invention;
Fig. 2 is a block diagram showing a configuration for controlling the LBP of an embodiment in accordance with the present invention;
Fig. 3 is a block diagram showing a configuration of a serial communication system for electrically connecting an engine controller, a duplexer unit controller, and an option paper feed cassette controller of an embodiment in accordance with the present invention;
Fig. 4 is a flowchart illustrating the start-up procedure of the detachable duplexer unit and detachable option paper feed cassette at the sleep release of an embodiment in accordance with the present invention;
Fig. 5 is a cross-sectional view showing a mechanical configuration of a laser beam printer (LBP) equipped with a plurality of option paper feed cassettes as the detachable sheet conveyance units of an embodiment in accordance with the present invention;
Fig. 6 is a block diagram showing a configuration for controlling the LBP of an embodiment in accordance with the present invention;
Fig. 7 is a block diagram showing a configuration of a serial communication system for electrically connecting an engine controller, a first option cassette controller and a second option cassette controller of an embodiment in accordance with the present invention;
Fig. 8 is a flowchart illustrating the start-up procedure of the plurality of the detachable option paper feed cassettes at the sleep release of the embodiment in accordance with the present invention; and
Fig. 9 is a flowchart showing a relationship of Figs. 9A and Fig. 9B;
Fig. 9A is a flowchart illustrating the start-up procedure based on the image generating conditions of the detachable duplexer unit and detachable option paper feed cassette at the sleep release of an embodiment in accordance with the present invention;
Fig. 9B is a flowchart illustrating the start-up procedure based on the image generating forming conditions of the detachable duplexer unit and detachable option paper feed cassette at the sleep release of an embodiment in accordance with the present invention.

### (EMBODIMENT 1)

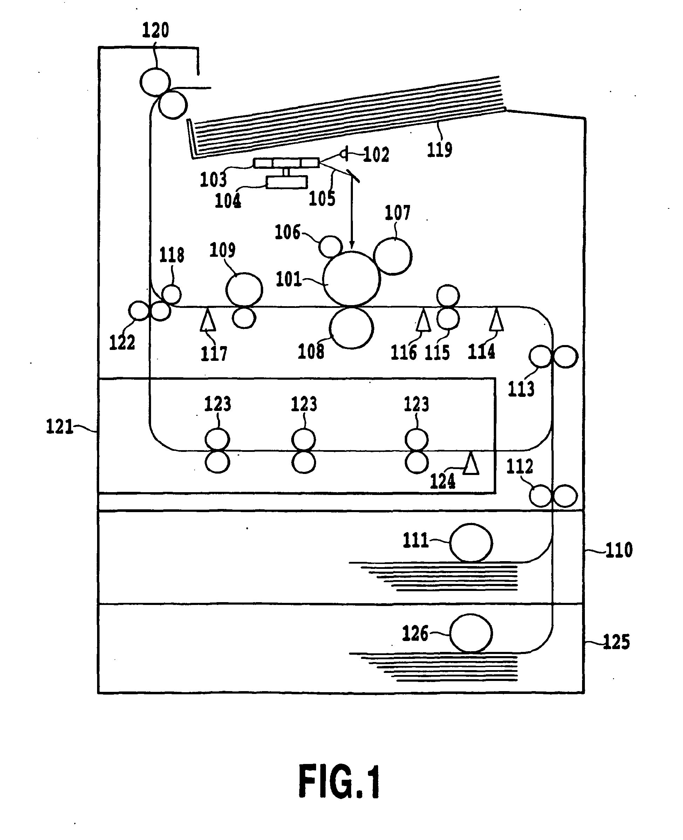

Fig. 1 is a cross-sectional view showing a configuration of a laser beam printer (LBP) equipped with at least one of an option paper feed cassette and a duplexer unit as a detachable sheet conveyance unit of an embodiment in accordance with the present invention.

The image generating forming apparatus is not limited to the LBP. For example, the image generating apparatus in accordance with the present invention is applicable to other printers, copiers and facsimiles based on an ink-jet scheme or the like.

In Fig. 1, reference numeral 101 designates a photoconductive drum composed of a photoconductive material. Reference numeral 102 designates a semiconductor laser as a light source for oscillating a laser beam corresponding to the image data fed from a computer or the like. Reference numeral 103 designates a rotary polygon mirror rotated by a scanner motor 104. Reference numeral 105 designates a laser beam oscillated by the semiconductor laser 102 and reflected by the rotary polygon mirror 103. By scanning the photoconductive drum 101 with the laser beam 105, a static latent image is formed on the photoconductive drum.

Reference numeral 106 designates a charged roller for uniformly charging the surface of the photoconductive drum 101 at a specified polarity and a potential. Reference numeral 107 designates a developer for carrying out developing by adhering toner to the static latent image formed on the photoconductive drum 101. Reference numeral 108 designates a transfer roller for transferring the toner image processed by the developer 107 onto a recording paper. Reference numeral 109 designates thermal fusing rollers for thermally fusing the toner transferred onto the recording paper.

Reference numeral 110 designates a paper feed cassette for storing recording papers. The paper feed cassette 110 identifies the size of the recording papers stored. Reference numeral 111 designates a cassette paper feed roller for feeding the recording paper from the paper feed cassette 110 by rotating the roller, and supplies it to the conveyance path. Reference numerals 112 and 113 each designate conveyance rollers for conveying the recording paper fed from the paper feed cassette to an image generating section.

Reference numeral 114 designates a pre-feed sensor for detecting the front end and rear end of the recording paper fed from the paper feed cassette. Reference numeral 115 designates pre-transfer rollers for conveying the recording paper to the photoconductive drum, the central part of the image generating section. Reference numeral 116 designates a top sensor for synchronizing the conveyance of the recording paper with the rotation of the photoconductive drum 101 on which the toner image is formed. In addition, the top sensor 116 measures the length of the recording paper in the conveyance direction. Reference numeral 117 designates a paper ejection sensor for detecting the presence and absence of the recording paper passing through the thermal fusing by the thermal fuser 109. Reference numeral 118 designates a paper ejection roller for conveying the recording paper after the thermal fusing to a paper ejection tray 119. Reference numeral 120 designates paper ejection reversing rollers for ejecting, by the forward rotation, the recording paper conveyed by the paper ejection roller 118 to the paper ejection tray 119. On the other hand, the paper ejection reversing rollers 120 conveys the recording paper to a detachable duplexer unit 121 by the reverse rotation. Reference numeral 122 designates duplex inlet rollers for conveying the recording paper from the paper ejection reversing rollers 120 to a duplex conveyance section in the detachable duplexer unit. Reference numeral 123 designates duplex conveyance rollers for conveying the recording paper from the duplex inlet rollers 122 to an upstream position of the image generating section. Reference numeral 124 designates a paper refeed sensor for detecting the paper conveyance state in the duplex conveyance section in the detachable duplexer unit.

Reference numeral 125 designates a detachable option paper feed cassette for storing recording paper. In addition, the option paper feed cassette 125 identifies the size of the recording paper stored. Reference numeral 126 designates a detachable option cassette paper feed roller for feeding a sheet of the recording paper from the detachable option paper feed cassette 125, and conveying it to the conveyance path by rotating the roller.

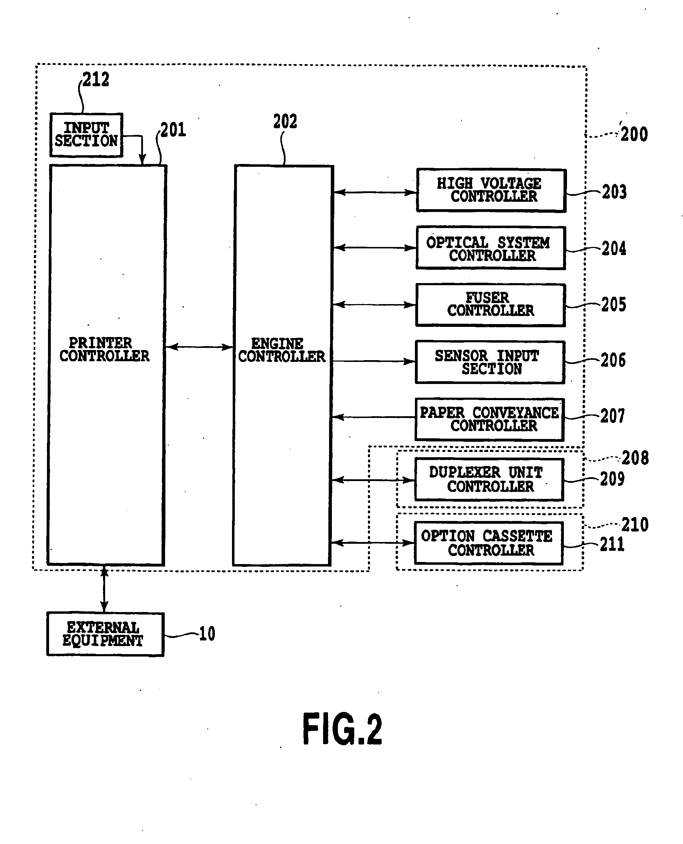

Fig. 2 is a block diagram showing a configuration for controlling the LBP. Reference numeral 200 designates a printer. Reference numeral 201 designates a printer controller for converting the image code data, which is fed from external equipment 10 such as a host computer connected to the printer 200, to bit data required for the image output. The printer controller 201 has a function of an interface for exchanging information between the external equipment 10 such as the host computer and the printer 200. Furthermore, the printer controller 201 receives a signal(s) which is fed from an input section 212 for inputting instructions to set the number of recording papers and the recording paper size. Furthermore, the printer controller 201 has a function as a instruction unit which outputs an instruction signal(s) to printer 200.

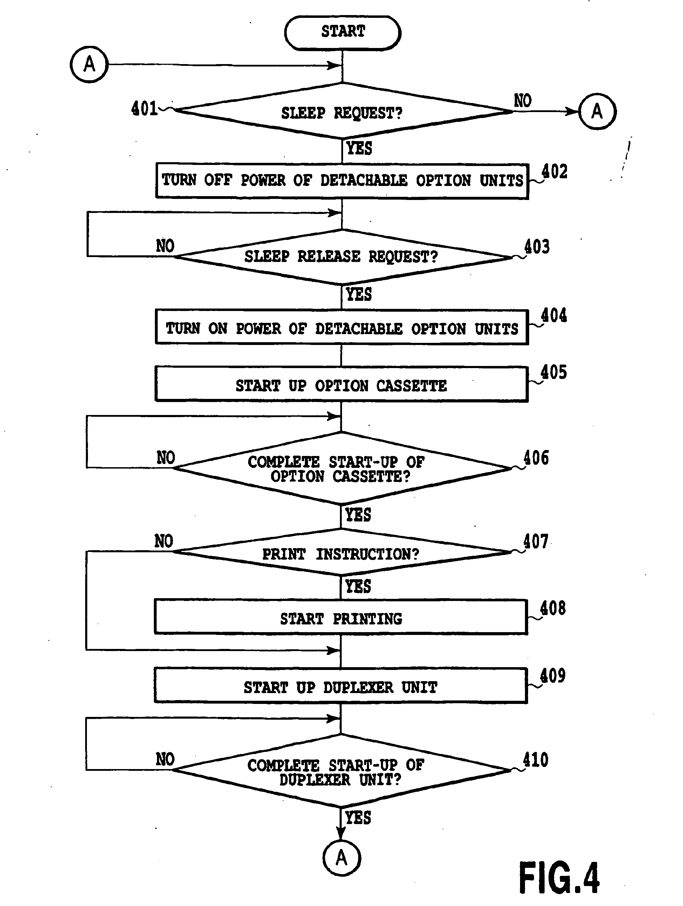

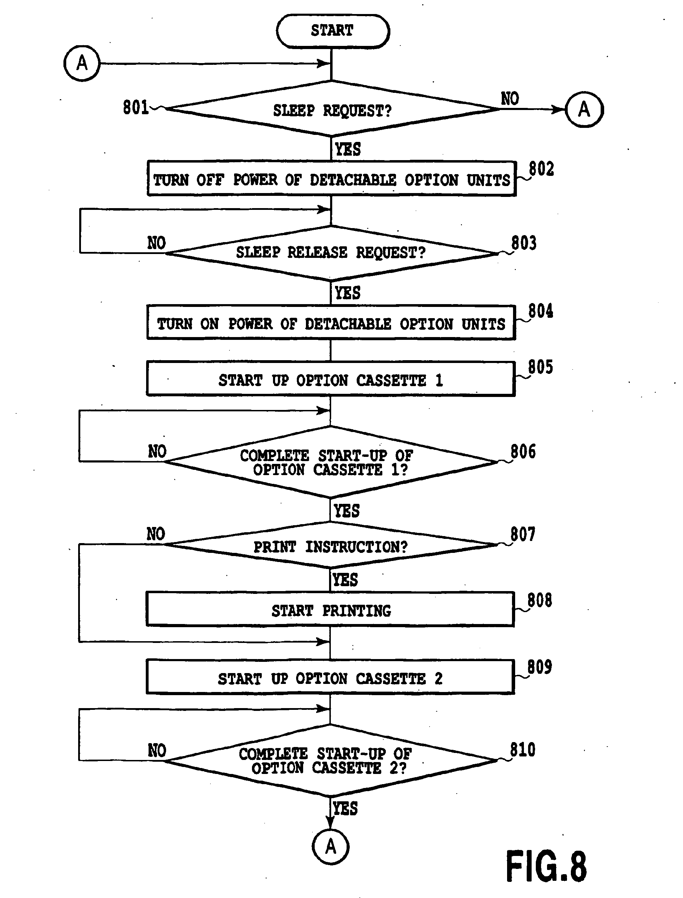

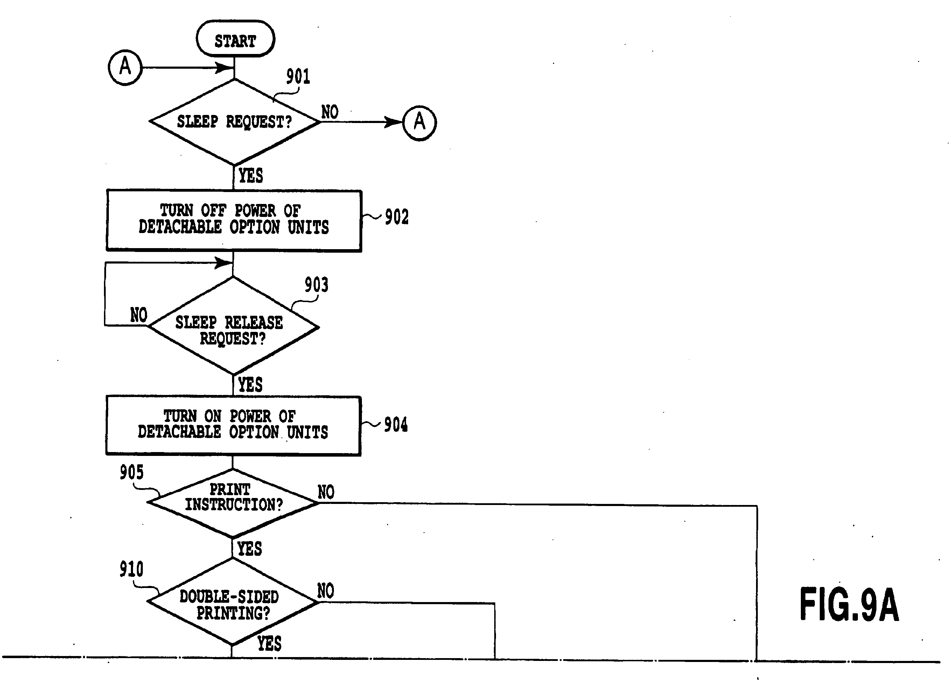

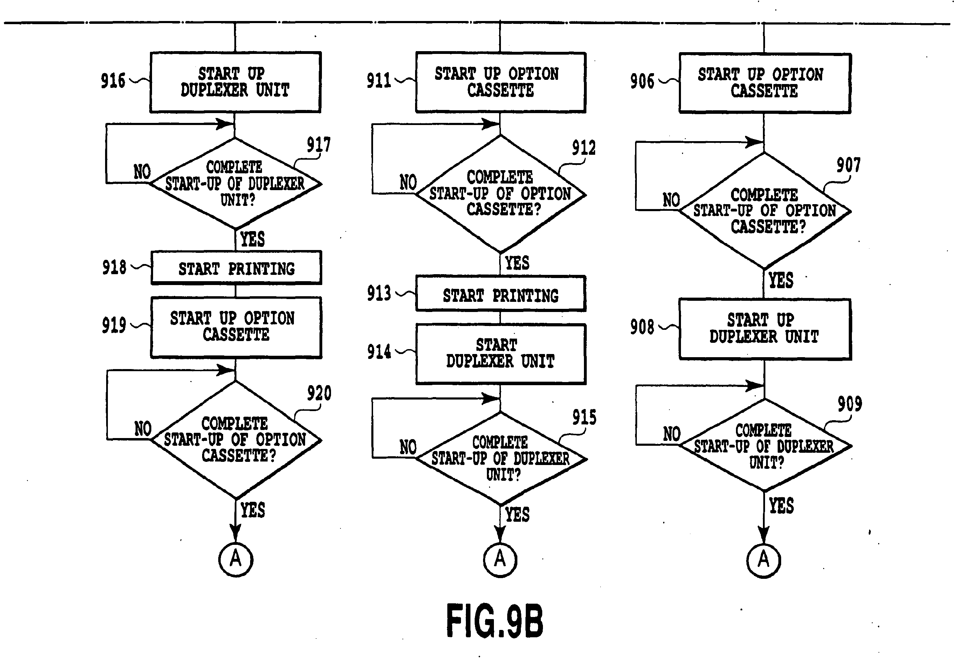

Reference numeral 202 designates an engine controller for controlling the print operation of the individual sections of the printer engine in accordance with the instructions fed from the printer controller 201. The engine controller 202 supplies the printer controller 201 with the data on the internal conditions of the printer 200. The engine controller 202 includes a CPU and a storage that stores a variety of programs including the program as shown in Fig. 4 as a control means of the CPU as will be described later (the engine controller in the following embodiments also include the program as illustrated in Fig. 8 or Figs. 9A and 9B). In the engine controller 202, the CPU executes the programs stored in the storage to control the print operation. The storage also stores priorities which will be described later. A user can set priorities via an input section 212 of the printer 200.

The priority includes a predetermined starting up order which is predetermined for option apparatuses (option paper feed cassette and duplexer unit)

The number of recording papers and the recording paper size or priorities are set by a signal fed from the external equipment 10 connected with the printer 200 as well as the input section 212 equipped with the printer 200.

Reference numeral 203 designates a high voltage controller for controlling the high voltage output, which is necessary for the individual steps required for the image output such as the charging, development and transfer, in response to the instructions fed from the engine controller 202. Reference numeral 204 designates an optical system controller for controlling the start/stop of the scanner motor 104 for controlling the rotation of the rotary polygon mirror 103 in response to the instructions fed from the engine controller 202. In addition, the optical system controller 204 switches the semiconductor laser 102 on and off in response to the image data. Reference numeral 205 designates a fuser controller for controlling the on/off of the current supply for heating the thermal fuser 109 to a specified temperature in accordance with the instructions fed from the engine controller 202. Reference numeral 206 designates a sensor input section for supplying the engine controller 202 with a signal indicating the presence and absence of the recording paper detected by the pre-feed sensor 114, top sensor 116 or paper ejection sensor 117. Reference numeral 207 designates a paper conveyance controller for controlling the start/stop of the motors/rollers for conveying the recording paper in accordance with the instructions fed from the engine controller 202. In Fig. 1, for example, it controls the start/stop of the cassette paper feed roller 111, conveyance rollers 112 and 113, pre-transfer rollers 115, thermal fusing rollers 109, paper ejection roller 118, or duplex inlet rollers 122.

Reference numeral 208 designates a detachable duplexer unit which is installed in the printer 200 (and designated by reference numeral 121 in Fig. 1). Reference numeral 209 designates a duplexer unit controller for controlling the start/stop of the duplex conveyance rollers 123 in the duplexer unit 121 in accordance with the instructions fed from the engine controller. The duplexer unit controller 209 supplies the engine controller 202 with a signal indicating the paper conveyance state in the duplex conveyance section, which is detected by the paper refeed sensor 124, via serial communication (not shown).

Reference numeral 210 designates a detachable option paper feed cassette which is installed in the printer 200 (and designated by reference numeral 125 in Fig. 1). Reference numeral 211 designates an option paper feed cassette controller for controlling the start/stop of the option cassette paper feed roller 126 in accordance with the instructions fed from the engine controller 202. The option paper feed cassette controller 211 supplies the engine controller 202 with the information on the size and presence and absence of the recording paper via the serial communication (not shown). In addition, Reference numeral 212 designates an input section such as an operation panel for allowing a user to set image generating conditions of the printer 200 or the like.

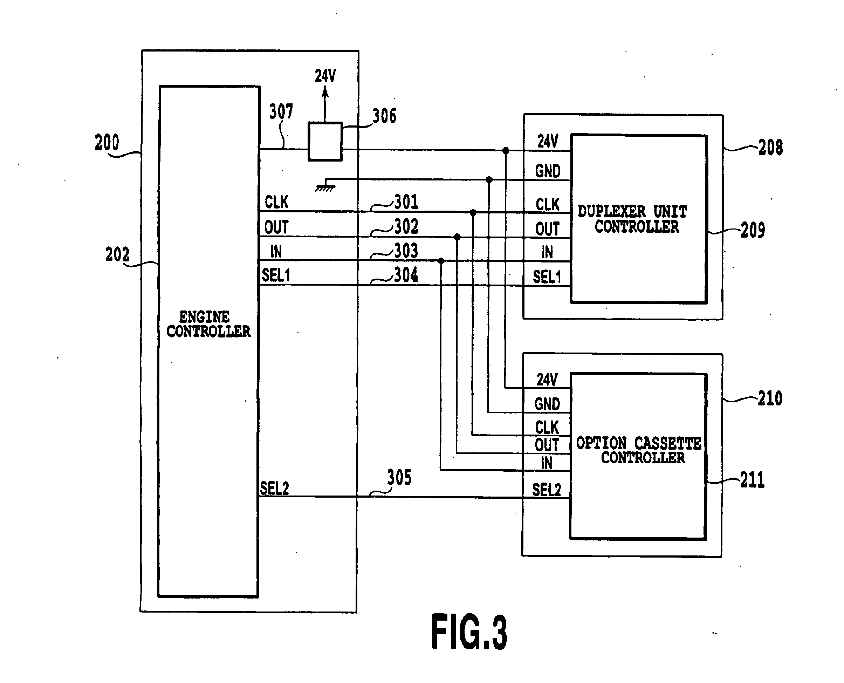

Fig. 3 is a block diagram showing a configuration of the serial communication system for electrically connecting the engine controller 202, duplexer unit controller 209 and option paper feed cassette controller 211. In the present embodiment, the engine controller 202, duplexer unit controller 209 and option paper feed cassette controller 211 are connected via three-wire serial communication.

In Fig. 3, a CLK signal 301 is a serial clock signal serving as the reference of the data transmission and reception in the serial communication. An OUT signal 302 is a signal indicating the command data fed from the engine controller 202 to the duplexer unit controller 209 or to the option paper feed cassette controller 211 in synchronization with the CLK signal 301. An IN signal 303 is a signal indicating the status data fed from the duplexer unit controller 209 or from the option paper feed cassette controller 211 to the engine controller 202 in synchronization with the CLK signal 301, when the duplexer unit controller 209 or option paper feed cassette controller 211 receives the OUT signal 302 indicating the command data from the engine controller 202. A SEL1 signal 304 is a duplexer unit select signal that indicates the truth value when the engine controller 202 carries out the serial communication with the duplexer unit controller 209, and indicates the false value when it does not carry out the serial communication. Likewise, a SEL2 signal 305 is an option paper feed cassette select signal that indicates the truth value when the engine controller 202 carries out the serial communication with the option paper feed cassette controller 211, and indicates the false value when it does not carry out the serial communication. A GND grounds the duplexer unit controller 209 and option paper feed cassette controller 211.

The CLK signal 301 consists of a pulse train with a specified frequency. The OUT signal 302 and IN signal 303 are signals in synchronization with the pulse train. The duplexer unit controller 209 and option paper feed cassette controller 211 are connected to the engine controller 202 in parallel through the serial communication means. Thus, the engine controller 202 must select one of the duplexer unit controller 209 and option paper feed cassette controller 211 to carry out the serial communication with one of them.

To make serial communication with the duplexer unit controller 209, for example, the engine controller 202 places the SEL1 signal 304 at the truth value and the SEL2 signal 305 at the false value, and sends the CLK signal 301. Thus, the engine controller 202 can exchange the command data or status data with the duplexer unit controller 209. On the other hand, to make serial communication with the option paper feed cassette controller 211, the engine controller 202 places the SEL2 signal 305 at the truth value and the SEL1 signal 304 at the false value, and sends the CLK signal 301. Thus, the engine controller 202 can exchange the command data or status data with the option paper feed cassette controller 211.

In this way, the engine controller 202 can perform the serial communication with a specified one of the duplexer unit controller 209 and option paper feed cassette controller 211.

Reference numeral 306 designates a switch composed of an electrical device such as a transistor, FET, or relay. The switch 306 turns on and off the power supply (24 V) to the duplexer unit controller 209 and option paper feed cassette controller 211. Reference numeral 307 designates an ON/OFF signal supplied from the engine controller 202. The ON/OFF signal 307 determined the ON/OFF state of the switch 306 for controlling the power supply.

Fig. 4 illustrates the start-up procedure of the detachable duplexer unit and detachable option paper feed cassette at the sleep release. In Fig. 4, reference numerals 401-410 each designate a step.

At step 401, the engine controller 202 confirms a presence and absence of the sleep request from the printer controller 201. The printer controller 201 sends the sleep request to the engine controller 202 when the next image generating operation is not carried out even a predetermined time period has elapsed from the previous image generating operation. When the engine controller 202 confirms the sleep request, it advances the processing to step 402. At step 402, the engine controller 202 turns off the power supply ON/OFF signal 307 to interrupt the power supply to the duplexer unit 208 and option paper feed cassette 210, which are the detachable option units. In this state, the engine controller 202 cannot perform the serial communication with the duplexerunit controller 209 nor the option paper feed cassette controller 211, which are in the power supply OFF state.

At step 403, the engine controller 202 waits for the sleep release instruction from the printer controller 201 that receives the image generating instruction from the external equipment such as the host computer. Receiving the sleep release instruction, the engine controller 202 advances the processing to step 404. The sleep release instruction requests the engine controller 202 to release the sleep mode. The sleep release instruction can be inputted by the input section 212.

At step 404 , the engine controller 202 turns on the ON/OFF signal 307 to switch on the power supply to the duplexer unit 208 and option paper feed cassette 210.

At step 405, the engine controller 202 sends the OUT signal 302, which instructs to start-up the option paper feed cassette controller 211 with a higher priority, in synchronization with the CLK signal 301 via the serial communication. At step 406, the engine controller 202 waits for the IN signal 303 which indicates the completion of the start-up by the option paper feed cassette controller 211 and is fed in synchronization with the CLK signal 301. Confirming the completion of the start-up by the option paper feed cassette controller 211 by the received IN signal 303, the engine controller 202 advances the processing to step 407.

Here, the start-up process of the option paper feed cassette will be described specifically. The option paper feed cassette controller 211 checks the present state of the option paper feed cassette in response to the signal for permitting the start-up coming from the printer controller 202. The signal (command) for inquiring the present state is sent to the option paper feed cassette controller 211 from the printer controller 202. In response to such inquiring signal, the option paper feed cassette controller 211 sends the information on the presence or absence of the paper sheets, the information on paper sheet size and the information on the presence or absence of the cassette to the printer controller 202. Such pieces of the information concerning the present states are transmitted from the printer controller 202 in the form of the serial communication by using the previously described OUT/IN signal. When the transmission of the present-state information is completed, the start-up of the option paper feed cassette is completed.

At step 407, the engine controller 202 waits for an image generation instruction sent from the printer controller 201 for a predetermined time period. When the image generating instruction is not sent from the printer controller 201 for the predetermined time period, the engine controller 202 advances the processing to step 409. If the image generating instruction is received in the predetermined time period, the engine controller 202 advances the processing to step 408 to start the image generating operation. In this case, when the paper stored in the option paper feed cassette 210 is designated as the recording paper, the engine controller 202 supplies the OUT signal indicating the paper feed instruction to the option paper feed cassette controller 211 in synchronization with the CLK signal 301 via the serial communication.

At step 409, the engine controller 202 sends the OUT signal 302, which instructs the duplexer unit controller 209 to start up the duplexer unit 208, in synchronization with the CLK signal 301 via the serial communication. At step 410, the engine controller 202 waits for the IN signal 303 indicating the completion of the start-up by the duplexer unit controller 209. Then, it confirms the completion of the start-up by the duplexer unit controller 209 by the received IN signal 303.

Here, the start-up process of the duplexer unit will be described specifically. The duplexer unit controller 209 checks the present state of the duplexer unit in response to the signal for permitting the start-up coming from the printer controller 202. The signal (command) for inquiring the present state is sent to the duplexer unit controller 209 from the printer controller 202. In response to such inquiring signal, the duplexer unit controller 209 sends the information on the presence or absence of the paper sheets in the duplex conveyance section and the information on equipment state of the unit to the printer controller 202. Such pieces of the information concerning the present states are transmitted from the printer controller 202 in the form of the serial communication by using the previously described OUT/IN signal. When the transmission of the present-state information is completed, the start-up of the duplexer unit is completed.

The reason why a higher start-up priority than the duplexer unit is assigned to the option paper feed cassette follows.

To form an image, a sheet of paper is fed from the paper feed cassette 110 included in the printer or from the detachable option paper feed cassette 125. To the duplexer unit, a sheet of paper having an image formed on a first side is guided. The duplexer unit is not used unless the controller 201 instructs the double-side printing. In other words, to form an image, it is likely that the option paper feed unit is used first. Thus, the higher start-up priority is assigned to the option paper feed unit.

The option paper feed cassette and the duplexer unit are detachable and are disconnected respectively from the power supply during the sleep mode. Hence, the previously described start-up operations are needed after being turned on because of checking whether sheets can be conveyed or not when the sleep mode is switched to the active mode. Therefore, if the image generating is started after waiting for the completion of the start-up operations for all the optional apparatuses, it takes a long time to perform a first print-out after sleep release.

Therefore, as described above, the present embodiment 1 starts the image generation in the state where only the paper feed unit is started up. Thus, it can reduce the first print time period in the case where the image generating operation starts simultaneously with the sleep release.

In the case of the present embodiment, the image generating process starts after completing the start-up process for the option paper feed cassette to start up the operation of the duplexer unit while the image formation process is in progress; however, the start-up operation of the duplexer unit is completed before the image generating (fixing process) on the sheet conveyed first after the start-up of the option paper feed cassette is completed; more specifically, even in the case where the duplex printing is commanded, at the time when the sheet, whereon the images have already been formed, is to be conveyed to the duplexer unit, the start-up of the duplexer unit has already been completed.

Further, the start of the image forming operation comprises herein, for instance, that the engine controller 202 starts the feed of the sheets in response to the printing command outputted from the printer controller 201, or that the engine controller 202 starts the preparatory operation for the printing operation in response to the printing command outputted from the printer controller 201. Here, the preparatory operation means the processing (pre-rotational processing) for setting the image generating apparatus ready for starting the printing operation including the processing for making uniform the distribution of the charge over the surface of the photoconductive drum.

### (EMBODIMENT 2)

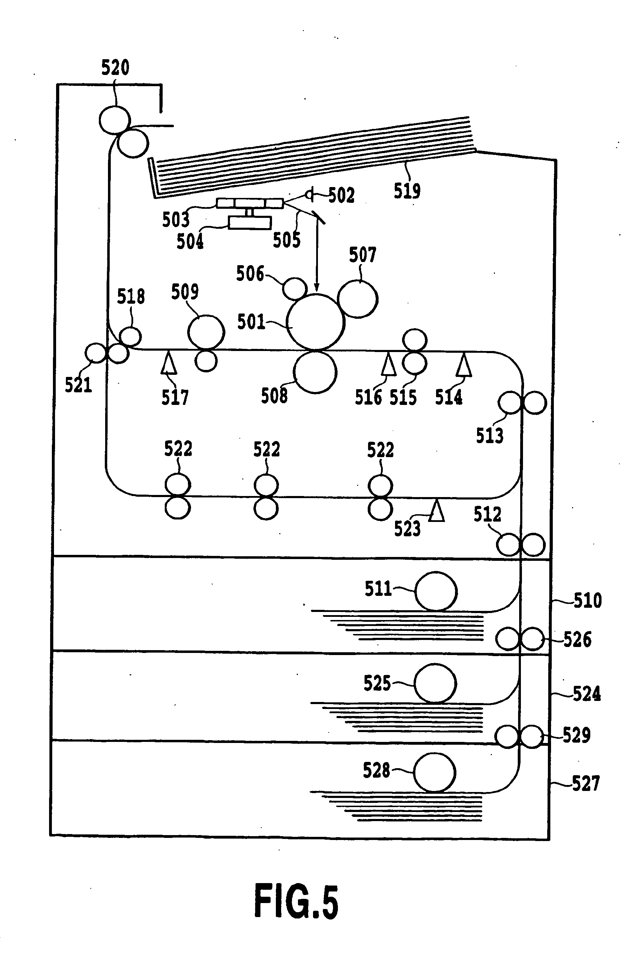

Fig. 5 is a cross-sectional view showing a configuration of a laser beam printer (LBP) equipped with a plurality of option paper feed cassettes as the detachable sheet conveyance units of the present embodiment 2. In Fig. 5, only the characteristic configuration of the present embodiment 2 will be described in detail with omitting the description of the same configuration as that of the embodiment 1 as shown in Fig. 1.

Reference numeral 524 designates a detachable first option paper feed cassette for storing recording paper. The first option paper feed cassette 524 identifies the size of the recording paper stored. Reference numeral 525 designates a detachable first option cassette paper feed roller. Every time the roller rotates once, a piece of the recording paper is fed from the detachable first option paper feed cassette 524 to conveyance rollers 526 on the conveyance path.

Reference numeral 527 designates a detachable second option paper feed cassette for storing recording paper. The second option paper feed cassette 527 identifies the size of the recording paper stored. The second option paper feed cassette 527 is stacked under the first option paper feed cassette 524. Reference numeral 528 designates a detachable second option cassette paper feed roller. Every time the roller rotates once, a piece of the recording paper is fed from the detachable second option paper feed cassette 527 to conveyance rollers 529 on the conveyance path.

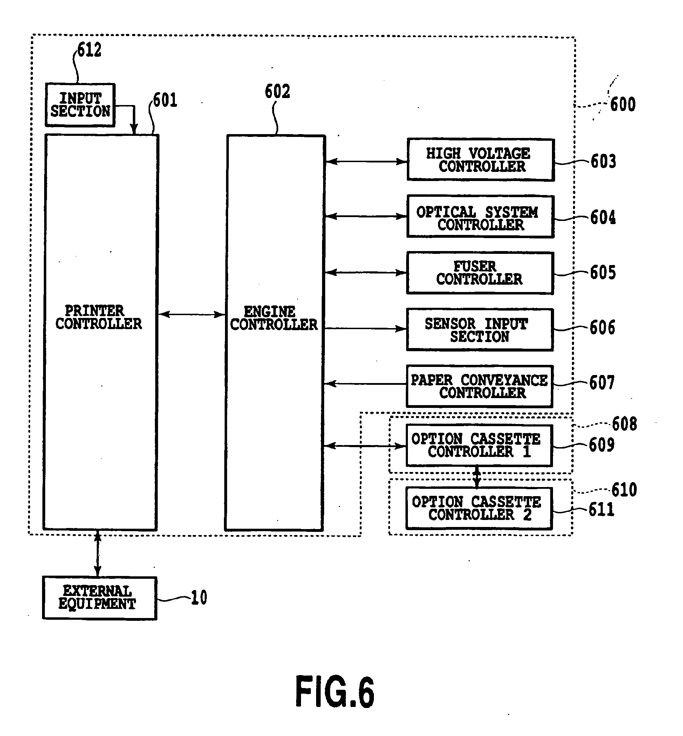

Fig. 6 is a block diagram showing a configuration for controlling the LBP. In Fig. 6, the same configuration as that of the embodiment 1 as shown in Fig. 2 is omitted, and only the characteristic configuration of the present embodiment 2 will be described in detail.

Reference numeral 608 designates a detachable first option paper feed cassette which is installed in the printer 600 (and designated by reference numeral 524 in Fig. 5). Reference numeral 609 designates a first option paper feed cassette controller for controlling the start/stop of the first option cassette paper feed roller 525 in accordance with the instructions from the engine controller 602. The first option paper feed cassette controller 609 notifies the engine controller 602 of the size and the presence and absence of the recording paper via the serial communication (not shown).

Reference numeral 610 designates a second option paper feed cassette 527 detachably attached to the first option paper feed cassette 524. Reference numeral 611 designates a second option paper feed cassette controller for controlling the start/stop of the second option cassette paper feed roller 528 in accordance with the instructions sent from the engine controller 602 via the serial communication (not shown) and the first option paper feed cassette controller 609. The second option paper feed cassette controller 611 notifies the engine controller 602 of the size and the presence and absence of the recording paper via the serial communication (not shown) and via the first option paper feed cassette controller 609.

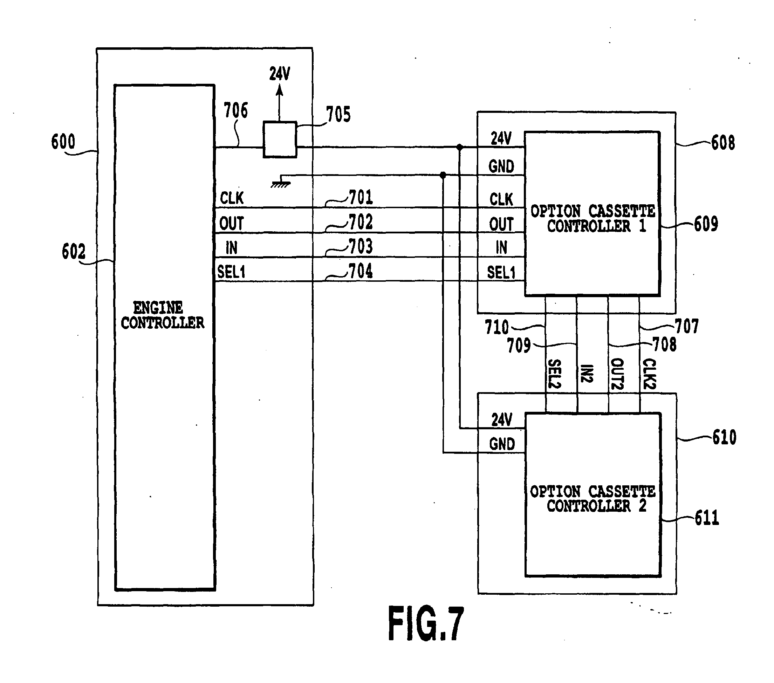

Fig. 7 is a block diagram showing a configuration of the serial communication system for electrically connecting the engine controller 602, first option paper feed cassette controller 609 and the second option paper feed cassette controller 611. In the present embodiment, the engine controller 602 is connected with the first option paper feed cassette controller 609 and second option paper feed cassette controller 611 via the three-wire serial communication.

In Fig. 7, a CLK signal 701 is a serial clock signal serving as the reference of the data transmission and reception in the serial communication. An OUT signal 702 is a signal indicating the command data fed from the engine controller 602 to the first option paper feed cassette controller 609 in synchronization with the CLK signal 701. An IN signal 703 is a signal indicating the status data fed from the first option paper feed cassette controller 609 to the engine controller 602 in synchronization with the CLK signal 701, when the first option paper feed cassette controller 609 receives the OUT signal 702 indicating the command data from the engine controller 602. A SEL1 signal 704 is a select signal indicating that the engine controller 702 carries out the serial communication with the first option paper feed cassette controller 609. The CLK signal 701 is a pulse train with a specified frequency. The OUT signal 702 and IN signal 703 are signals in synchronization with the pulse train.

A CLK2 signal 707 is a serial clock signal serving as the reference of the data transmission and reception in the serial communication. An OUT2 signal 708 is a signal indicating the command data fed from the first option paper feed cassette controller 609 to the second option paper feed cassette controller 611 in synchronization with the CLK2 signal 707. An IN2 signal 709 is a signal indicating the status data fed from the secondoption paper feed cassette controller 611 to the first option paper feed cassette controller 609 in synchronization with the CLK2 signal 707, when the second option paper feed cassette controller 611 receives the OUT2 signal 709 indicating the command data from the first option paper feed cassette controller 609. A SEL2 signal 710 is a select signal indicating that the first option paper feed cassette controller 609 carries out the serial communication with the second option paper feed cassette controller 611. The GND grounds the first option paper feed cassette controller 609 and second option paper feed cassette controller 611.

To exchange data with the second option paper feed cassette controller 611, the engine controller 602 sends the OUT signal 702, which indicates the command data for the second option cassette controller, to the first option paper feed cassette controller 609 in synchronization with the CKL signal 701 via the serial communication. Receiving the OUT signal 702, the first option paper feed cassette controller 609 sends the OUT signal 702 to the second option paper feed cassette controller 611 as the OUT2 signal 708 in synchronization with the CLK2 signal 707 via the serial communication in order to send the command data to the second option paper feed cassette controller 611. Receiving the OUT2 signal 708, the second option paper feed cassette controller 611 sends the IN2 signal 709 indicating the status data to the first option paper feed cassette controller 609 in synchronization with the CLK2 signal 707 via the serial communication. Receiving the IN2 signal 709, the first option paper feed cassette controller 609 sends the IN signal 703 to the engine controller 602, which is the same signal as the IN2 signal 709 for sending the status data to the engine controller 602, in synchronization with the CLK signal 701 via the serial communication.

In this way, the engine controller 602 can exchange the data with the second option paper feed cassette controller 611.

Reference numeral 705 designates a switch composed of an electrical device such as a transistor, FET, or relay. The switch 705 turns on and off the power supply (24 V) to the first option paper feed cassette controller 609 and second option paper feed cassette controller 611. Reference numeral 706 designates an ON/OFF signal supplied from the engine controller 602. The ON/OFF signal 706 determined the ON/OFF state of the switch 705 for controlling the power supply.

Fig. 8 illustrates the start-up procedure of the plurality of detachable option paper feed cassettes at the sleep release. In Fig. 8, reference numerals 801-810 each designate a step.

At step 801, the engine controller 602 confirms a presence and absence of the sleep request from the printer controller 601. The printer controller 601 sends the sleep request to the engine controller 602 when the next image generating operation is not carried out even a predetermined time period has elapsed from the previous image generating operation. When the engine controller 602 confirms sleep request, it advances the processing to step 802. At step 802, the engine controller 602 turns off the power supply ON/OFF signal 706 to interrupt the power supply to the first option paper feed cassette 608 and second option paper feed cassette 610, which are the detachable option units. In this state, the engine controller 602 cannot perform the serial communication with the first option paper feed cassette controller 609 and second option paper feed cassette controller 611, which are in the power supply OFF state.

At step 803, the engine controller 602 waits for the sleep release instruction from the printer controller 601 that receives the image generating instruction from the external equipment such as a host computer. Receiving the sleep release instruction, the engine controller 602 advances the processing to step 804. The sleep release instruction requests the printer controller 601 to release the sleep mode. The sleep release instruction can be inputted by an input section 612.

At step 804, the engine controller 602 turns on the ON/OFF signal 706 to switch on the power supply to the first option paper feed cassette 608 and second option paper feed cassette 610.

At step 805, the engine controller 602 sends the OUT signal 702 instructing the start-up to the first option paper feed cassette controller 609 with the higher priority via the serial communication in synchronization with the CLK signal 701. At step 806, the engine controller 602 waits for the IN signal 703 which indicates the completion of the start-up by the first option paper feed cassette controller 609 and is fed in synchronization with the CLK signal 701. Confirming the completion of the start-up by the first option paper feed cassette controller 609 by the received IN signal 703, the engine controller 602 advances the processing to step 807.

At step 807, the engine controller 602 waits for the image generation instruction sent from the printer controller 601 for a predetermined time period. If the image generating instruction is not sent from the printer controller 601 for the predetermined time period, the engine controller 602 advances the processing to step 809. If the image generating instruction is received in the predetermined time period, the engine controller 602 advances the processing to step 808 to start the image generating operation. In this case, when the paper stored in the first option paper feed cassette 608 is designated as the recording paper, the engine controller 602 supplies the OUT signal 702 indicating the paper feed instruction to the first option paper feed cassette controller 609 via the serial communication.

At step 809, the engine controller 602 sends the OUT signal 702 instructing the start-up to the second option paper feed cassette controller 611 via the serial communication and the first option paper feed cassette controller 609 to start up the second option paper feed cassette 610. At step 810, the engine controller 602 waits for the IN signal 702 indicating the completion of the start-up by the second option paper feed cassette controller 611. Then, it confirms the completion of the start-up by the second option paper feed cassette controller 611 by the received IN signal 703.

Since a start-up operation for the first and second option paper feed cassette is the same as that of the option paper feed cassette described in embodiment 1, a detailed description of the operations are omitted.

The reason why a higher start-up priority than the second option paper feed cassette is assigned to the first option paper feed cassette follows.

As described in connection with Fig.7, the data communication with the second option paper feed cassette controller 611 is performed via the first option paper feed cassette controller 609. Accordingly, the first option paper feed cassette is started up earlier than the second option paper feed cassette. Thus, a higher priority is assigned to the first option paper feed cassette.

A plurality of option paper feed cassettes are detachable and are disconnected respectively from the power supply during the sleep mode. Hence, the previously described start-up operations are needed after being turned on because of checking whether sheets can be conveyed or not when the sleep mode is switched to the active mode. Therefore, if the image generating is started after waiting for the completion of the start-up operations for all the optional apparatuses, it takes along time to perform a first print-out after sleep release.

Therefore, as described above, the present embodiment 2 starts the image generating operation in the state where only the paper feed unit with the earlier start-up time is started up among the plurality of paper feed unites. Thus, it can reduce the first print time period in the case where the image generating operation is started simultaneously with the sleep release.

It is needless to say that if a paper feed from the second option paper feed cassette is commanded for an image generating immediately after sleep release, the image generating is started after the completion of the start-up operation for the second option paper feed cassette.

### (EMBODIMENT 3)

In the embodiments 1 and 2, the configurations that assign the priorities to the detachable option units by the connection formation are described in detail. In the present embodiment 3, a configuration capable of varying the assignment of the priorities in response to image generating conditions after the sleep release will be described in detail.

The image generating apparatus of the present embodiment has the configuration as shown in Fig. 1. Since the details of Fig. 1 are described in the embodiment 1, their description is omitted here. In addition, the configuration of the control system is shown in Fig. 2, and that of the serial communication system is shown in Fig. 3. Since they are also described in the embodiment 1, their description is also omitted.

Figs. 9A and 9B illustrate the start-up procedure in accordance with the image generating conditions of the detachable duplexer unit and detachable option paper feed cassette at the sleep release. In Figs. 9A and 9B, reference numerals 901-920 each designate a step.

At step 901, the engine controller 202 confirms a presence and absence of the sleep request from the printer controller 201. The printer controller 201 sends the sleep request to the engine controller 202 when the next image generating operation is not carried out even a predetermined time period has elapsed from the previous image generating operation. When the engine controller 202 confirms the sleep request, it advances the processing to step 902. At step 902, the engine controller 202 turns off the power supply ON/OFF signal 307 to interrupt the power supply to the duplexer unit 208 and option paper feed cassette 210, which are the detachable option units. In this state, the engine controller 202 cannot perform the serial communication with the duplexer unit controller 209 or the option paper feed cassette controller 211, which are in the power supply OFF state.

At step 903, the engine controller 202 waits for the sleep release instruction from the printer controller 201 that receives the image generating instruction from the external equipment such as a host computer. Receiving the sleep release instruction, the engine controller 202 advances the processing to step 904. The sleep release instruction requests the printer controller 201 to release the sleep mode. For example, the sleep release instruction can be inputted by an input section 212.

At step 904, the engine controller 202 turns on the ON/OFF signal 307 to switch on the power supply to the duplexer unit 208 and option paper feed cassette 210.

At step 905, the engine controller 202 waits for the image generation instruction sent from the printer controller 201 for a predetermined time period. When the image generating instruction is received from the printer controller 201, the engine controller 202 advances the processing to step 910. If the image generating instruction is not sent for the predetermined time period, the engine controller 202 advances the processing to step 906.

At step 906, the engine controller 202 sends the OUT signal 302 instructing the start-up to the option paper feed cassette controller 211 in synchronization with the CLK signal 301 via the serial communication. At step 907, the engine controller 202 waits for the IN signal 303 which indicates the completion of the start-up by the option paper feed cassette controller 211 and is sent in synchronization with the CLK signal 301. Confirming the completion of the start-up by the option paper feed cassette controller 211 by the received IN signal 303, the engine controller 202 advances the processing to step 908.

At step 908, the engine controller 202 sends the OUT signal 302 indicating the start-up to the duplexer unit controller 209 in synchronization with the CLK signal 301 via the serial communication to start up the duplexer unit 208. At step 909, the engine controller 202 waits for the IN signal 303 indicating the completion of the start-up by the duplexer unit controller 209. Then, it confirms the completion of the start-up by the duplexer unit controller 209 by the received IN signal 303.

When at step 905, the engine controller 202 receives the image generating instruction from the printer controller 201, at step 910, it makes a decision as to whether the image generating instruction fed from the printer controller 201 commands the double-sided printing or not. When the image generating instruction commands the double-sided printing, the engine controller 202 advances the processing to step 916. When the image generating instruction does not command the double-sided printing, the engine controller 202 advances the processing to step 911.

At step 911, the engine controller 202 sends the OUT signal 302 instructing to start up the option paper feed cassette controller 211 in synchronization with the CLK signal 301 via the serial communication. At step 912, the engine controller 202 waits for the IN signal 303 which indicates the completion of the start-up by the option paper feed cassette controller 211 and is sent in synchronization with the CLK signal 301. Confirming the completion of the start-up by the option paper feed cassette controller 211 by the received IN signal 303, the engine controller 202 advances the processing to step 913 to start the image generating operation. In this case, when the paper stored in the option paper feed cassette 210 is designated as the recording paper, the engine controller 202 sends the OUT signal indicating the paper feed instruction to the option paper feed cassette controller 211 in synchronization with the CLK signal 301 via the serial communication.

At step 914, the engine controller 202 sends the OUT signal 302 instructing to start up the duplexer unit 208 to the duplexer unit controller 209 in synchronization with the CLK signal 301 via the serial communication. At step 915, the engine controller 202 waits for the IN signal 303 indicating the completion of the start-up by the duplexer unit controller 209. Then, it confirms the completion of the start-up by the duplexer unit controller 209 by the received IN signal 303.

When at step 910, the image generating instruction fed from the printer controller 201 commands the double-sided printing, at step 916, the engine controller 202 sends the OUT signal 302 instructing to start up the duplexer unit 208 to the duplexer unit controller 209 in synchronization with the CLK signal 301 via the serial communication.

At step 917, the engine controller 202 waits for the IN signal 303 indicating the completion of the start-up by the duplexer unit controller 209. When it confirms the completion of the start-up by the duplexer unit controller 209 by the received IN signal 303, the engine controller 202 advances the processing to step 919.

At step 918, the engine controller 202 sends the OUT signal 302 indicating the operation instruction of the duplex conveyance section to the duplexer unit controller 209 in synchronization with the CLK signal 301 via the serial communication in accordance with the instruction on the double-sided printing fed from the printer controller 201. In addition, it also sends the image generating instruction to the individual apparatuses that carry out the image generation in the printer 200. At step 919, the engine controller 202 sends the OUT signal 302 instructing to start up the option paper feed cassette 210 to the option paper feed cassette controller 211 in synchronization with the CLK signal 301 via the serial communication. At step 920, the engine controller 202 waits for the IN signal 303 which indicates the completion of the start-up by the option paper feed cassette controller 211 and is sent in synchronization with the CLK signal 301. Then, it confirms the start-up of the option paper feed cassette controller 211 by the received IN signal 303.

In this way, the present embodiment can reduce the first print time period in the case where the image generation is started simultaneously with the sleep release by starting up the option unit flexibly in response to the image generating conditions (specified paper feed outlet).

The present invention has been described in detail with respect to preferred embodiments, and it will now be apparent from the foregoing to those skilled in the art that changes and modifications may be made without departing from the scope of the invention as defined in the appendent claims.

## Claims

1. An image forming apparatus on which a plurality of option units (208, 210; 608, 610) are detachably mounted, said image forming apparatus comprising:
a control unit (202; 602) for turning off power supply to said plurality of option units when an image forming operation is not performed for a predetermined time period; and
an instruction unit (201; 601) for instructing a release of a state of turning off the power supply of said plurality of option units,
**characterized in that**
said control unit is arranged to turn on the power supply to all of said plurality of option units in response to the instructed release, and to successively start up said plurality of option units in accordance with a predetermined order after having turned on the power supply to all of said plurality of option units, by sending an instruction signal from said control unit to said plurality of option units, respectively, via a communication line.

2. The image forming apparatus as claimed in claim 1, wherein said control unit is arranged to start up image forming operation in parallel with a start-up of another option unit, after completion of starting up one of said plurality of option units in accordance with the predetermined order.

3. The image forming apparatus as claimed in claim 1 or 2, further comprising at least two detachable sheet conveyance units as said plurality of option units.

4. The image forming apparatus as claimed in claim 3, wherein said at least two detachable sheet conveyance units include a sheet feed unit and a sheet ejection unit placed downstream of said sheet feed unit, and wherein said sheet feed unit has assigned a higher start-up order than said sheet ejection unit.

5. The image forming apparatus as claimed in claim 3 or 4, wherein said at least two detachable sheet conveyance units include a plurality of sheet feed units that can be stacked and connected with each other, and wherein as for said plurality of sheet feed units that are stacked and connected, a downstream sheet feed unit has assigned a higher start-up order than an upstream sheet feed unit.

6. The image forming apparatus as claimed in claim 4 or 5, wherein said sheet ejection unit comprises a duplex conveyance unit for switching back a sheet, a first surface of the sheet having an image formed thereon.

7. The image forming apparatus as claimed in any of claims 1 to 6, wherein the predetermined order corresponds to image forming conditions.

8. A control method of an image forming apparatus on which a plurality of option units (208, 210; 608, 610) are detachably mounted, said method comprising:
a first control step (402; 802; 902) of turning off power supply by a control unit (202; 602) to said plurality of option units when an image forming operation is not performed for a predetermined time period; and
an instruction step (403; 803; 903) of instructing a release of a state of turning off the power supply of said plurality of option units,
**characterized by:**
a second control step (404; 804; 904) of turning on the power supply to all of said plurality of option units by the control unit in response to the instructed release; and
a third control step (405, 409; 805, 809; 906, 911, 916) of successively starting up said plurality of option units by the control unit in accordance with a predetermined order after the control unit has turned on the power supply to all of said plurality of option units in the second control step, by sending an instruction signal from the control unit to said plurality of option units, respectively, via a communication line.

9. The method as claimed in claim 8, further comprising a step of starting up image forming operation in parallel with a start-up of another option unit, after completion of starting up one of said plurality of option units in accordance with the predetermined order.

10. The method as claimed in claim 8 or 9, the image forming apparatus further comprising at least two detachable sheet conveyance units as said plurality of option units.

11. The method as claimed in claim 10, wherein said at least two detachable sheet conveyance units include a sheet feed unit and a sheet ejection unit placed downstream of said sheet feed unit, and wherein a higher start-up order than said sheet ejection unit is assigned to said sheet feed unit.

12. The method as claimed in claim 10 or 11, wherein said at least two detachable sheet conveyance units include a plurality of sheet feed units that can be stacked and connected with each other, and wherein as for said plurality of sheet feed units that are stacked and connected, a higher start-up order than an upstream sheet feed unit is assigned to a downstream sheet feed unit.

13. The method as claimed in claim 11 or 12, wherein said sheet ejection unit comprises a duplex conveyance unit for switching back a sheet, a first surface of the sheet having an image formed thereon.

14. The method as claimed in any of claims 8 to 13, wherein the predetermined order corresponds to image forming conditions.

## Patentansprüche

1. Bilderzeugungsvorrichtung, an der eine Vielzahl von Optionseinheiten (208, 210; 608, 610) abnehmbar angebracht ist, wobei die Bilderzeugungsvorrichtung Folgendes aufweist:
eine Steuereinheit (202; 602) zum Ausschalten einer Energieversorgung zu der Vielzahl von Optionseinheiten, wenn seit einem vorbestimmten Zeitabschnitt kein Bilderzeugungsbetrieb durchgeführt wird; und
eine Anweisungseinheit (201; 601) zum Anweisen eines Auflösens eines Zustands eines Ausschaltens der Energieversorgung der Vielzahl von Optionseinheiten,
**dadurch gekennzeichnet, dass**
die Steuereinheit eingerichtet ist, die Energieversorgung zu allen der Vielzahl von Optionseinheiten im Ansprechen auf das angewiesene Auflösen einzuschalten, und nacheinander die Vielzahl von Optionseinheiten gemäß einer vorbestimmten Reihenfolge, nachdem die Energieversorgung zu allen der Vielzahl von Optionseinheiten eingeschaltet wurde, durch Senden eines Anweisungssignals von der Steuereinheit an jeweils die Vielzahl von Optionseinheiten über eine Kommunikationsleitung in Betrieb zu setzen.

2. Bilderzeugungsvorrichtung nach Anspruch 1, wobei die Steuereinheit eingerichtet ist, einen Bilderzeugungsbetrieb parallel zu einer Inbetriebsetzung einer anderen Optionseinheit nach einer Beendigung eines Inbetriebsetzens einer der Vielzahl von Optionseinheiten gemäß der vorbestimmten Reihenfolge in Betrieb zu setzen.

3. Bilderzeugungsvorrichtung nach Anspruch 1 oder 2, ferner mit zumindest zwei abnehmbaren Blatttransporteinheiten als die Vielzahl von Optionseinheiten.

4. Bilderzeugungsvorrichtung nach Anspruch 3, wobei die zumindest zwei abnehmbaren Blatttransporteinheiten eine Blattzuführeinheit und eine der Blattzuführeinheit nachgelagerte Blattauswurfeinheit umfassen, und wobei der Blattzuführeinheit eine höhere Inbetriebsetzungsreihenfolge als der Blattauswurfeinheit zugewiesen ist.

5. Bilderzeugungsvorrichtung nach Anspruch 3 oder 4, wobei die zumindest zwei abnehmbaren Blatttransporteinheiten eine Vielzahl von Blattzuführeinheiten umfassen, die gestapelt und miteinander verbunden werden können, und wobei in Bezug auf die Vielzahl von Blattzuführeinheiten, die gestapelt und verbunden sind, einer nachgelagerten Blattzuführeinheit eine höhere Inbetriebsetzungsreihenfolge als einer vorgelagerten Blattzuführeinheit zugewiesen ist.

6. Bilderzeugungsvorrichtung nach Anspruch 4 oder 5, wobei die Blattauswurfeinheit eine Zweifachtransporteinheit zum Rückschalten eines Blattes aufweist, wobei eine erste Oberfläche des Blattes ein darauf erzeugtes Bild aufweist.

7. Bilderzeugungsvorrichtung nach einem der Ansprüche 1 bis 6, wobei die vorbestimmte Reihenfolge Bilderzeugungsbedingungen entspricht.

8. Steuerverfahren einer Bilderzeugungsvorrichtung, an der eine Vielzahl von Optionseinheiten (208, 210; 608, 610) abnehmbar angebracht ist, wobei das Verfahren die folgenden Schritte umfasst:
einen ersten Steuerschritt (402; 802; 902) eines Ausschaltens einer Energieversorgung zu der Vielzahl von Optionseinheiten durch eine Steuereinheit (202; 602), wenn seit einem vorbestimmten Zeitabschnitt kein Bilderzeugungsbetrieb durchgeführt wird; und
einen Anweisungsschritt (403; 803; 903) eines Anweisens eines Auflösens eines Zustands eines Ausschaltens der Energieversorgung der Vielzahl von Optionseinheiten,
**gekennzeichnet durch**
einen zweiten Steuerschritt (404; 804; 904) eines Einschaltens der Energieversorgung zu allen der Vielzahl von Optionseinheiten **durch** die Steuereinheit im Ansprechen auf das angewiesene Auflösen; und
einen dritten Steuerschritt (405, 409; 805, 809; 906, 911, 916) eines nacheinander Inbetriebsetzens der Vielzahl von Optionseinheiten **durch** die Steuereinheit gemäß einer vorbestimmten Reihenfolge, nachdem die Steuereinheit die Energieversorgung zu allen der Vielzahl von Optionseinheiten in dem zweiten Steuerschritt eingeschaltet hat, **durch** Senden eines Anweisungssignals von der Steuereinheit an jeweils die Vielzahl von Optionseinheiten über eine Kommunikationsleitung.

9. Verfahren nach Anspruch 8, ferner mit einem Schritt eines Inbetriebsetzens eines Bilderzeugungsbetriebs parallel zu eines Inbetriebsetzens einer anderen Optionseinheit nach einer Beendigung eines Inbetriebsetzens einer der Vielzahl von Optionseinheiten gemäß der vorbestimmten Reihenfolge.

10. Verfahren nach Anspruch 8 oder 9, wobei die Bilderzeugungsvorrichtung ferner zumindest zwei abnehmbare Blatttransporteinheiten als die Vielzahl von Optionseinheiten aufweist.

11. Verfahren nach Anspruch 10, wobei die zumindest zwei abnehmbaren Blatttransporteinheiten eine Blattzuführeinheit und eine der Blattzuführeinheit nachgelagerte Blattauswurfeinheit umfassen, und wobei der Blattzuführeinheit eine höhere Inbetriebsetzungsreihenfolge als der Blattauswurfeinheit zugewiesen wird.

12. Verfahren nach Anspruch 10 oder 11, wobei die zumindest zwei abnehmbaren Blatttransporteinheiten eine Vielzahl von Blattzuführeinheiten umfasst, die gestapelt und miteinander verbunden werden können, und wobei in Bezug auf die Vielzahl von Blattzuführeinheiten, die gestapelt und verbunden werden, einer nachgelagerten Blattzuführeinheit eine höhere Inbetriebsetzungsreihenfolge als einer vorgelagerten Blattzuführeinheit zugewiesen wird.

13. Verfahren nach Anspruch 11 oder 12, wobei die Blattauswurfeinheit eine Zweifachtransporteinheit zum Rückschalten eines Blattes aufweist, wobei eine erste Oberfläche des Blattes ein darauf erzeugtes Bild aufweist.

14. Verfahren nach einem der Ansprüche 8 bis 13, wobei die vorbestimmte Reihenfolge Bilderzeugungsbedingungen entspricht.

## Revendications

1. Appareil de formation d'image sur lequel une pluralité d'unités d'option (208, 210; 608, 610) sont montées de façon détachable, ledit appareil de formation d'image comprenant: une unité de commande (202; 602) pour interrompre l'alimentation de ladite pluralité d'unités d'option quand une opération de formation d'image n'est pas exécutée pour une période déterminée; et
une unité d'instruction (201; 601) pour ordonner un relâchement d'un état d'interruption de l'alimentation de ladite pluralité d'unités d'option,
**caractérisé en ce que:**
ladite unité de commande est configurée de façon à établir l'alimentation de l'ensemble de ladite pluralité d'unités d'option en réponse au relâchement ordonné, et à démarrer successivement ladite pluralité d'unités d'option selon un ordre prédéterminé après avoir établi l'alimentation de l'ensemble de ladite pluralité d'unités d'option, par l'envoi d'un signal d'instruction de ladite unité de commande à ladite pluralité d'unités d'option, respectivement, par l'intermédiaire d'une ligne de communication.

2. Appareil de formation d'image selon la revendication 1, dans lequel ladite unité de commande est configurée de façon à démarrer une opération de formation d'image en parallèle avec une start-up d'une autre unité d'option, après l'achèvement du démarrage de l'une de ladite pluralité d'unités d'option selon l'ordre prédéterminé.

3. Appareil de formation d'image selon la revendication 1 ou 2, comprenant de plus au moins deux unités de convoyage de feuille détachables constituant ladite pluralité d'unités d'option.

4. Appareil de formation d'image selon la revendication 3, dans lequel lesdites au moins deux unités de convoyage de feuilles détachables comprennent une unité d'avance de feuille et une unité d'éjection de feuille disposée en aval de ladite unité d'avance de feuille, et dans lequel ladite unité d'avance de feuille se voit attribuer un ordre de démarrage supérieur à celui de ladite unité d'éjection de feuille.

5. Appareil de formation d'image selon la revendication 3 ou 4, dans lequel lesdites au moins deux unités de convoyage de feuille détachables comprennent une pluralité d'unités d'avance de feuille qui peuvent être empilées et reliées les unes aux autres, et dans lequel, en ce qui concerne ladite pluralité d'unités d'avance de feuille qui sont empilées et reliées, une unité d'avance de feuille d'aval se voit attribuer un ordre de démarrage supérieur à celui d'une unité d'avance de feuille amont.

6. Appareil de formation d'image selon la revendication 4 ou 5, dans lequel ladite unité d'éjection de feuille comprend une unité de convoyage duplex pour retourner une feuille, une première surface de la feuille ayant une image formée sur celle-ci.

7. Appareil de formation d'image selon l'une quelconque des revendications 1 à 6, dans lequel l'ordre prédéterminé correspond à des conditions de formation d'image.

8. Procédé de commande d'un appareil de formation d'image sur lequel une pluralité d'unités d'option (208, 210; 608, 610) sont montées de façon détachable, ledit procédé comprenant: une première étape de commande (402; 802; 902) consistant à faire interrompre par une unité de commande (202; 602) une alimentation de ladite pluralité d'unités d'option, quand une opération de formation d'image n'est pas exécutée pour une période prédéterminée; et une étape d'instruction (403; 803; 903) consistant à ordonner un relâchement d'un état d'interruption de l'alimentation de ladite pluralité d'unités d'option,
**caractérisé par**:
une deuxième étape de commande (404; 804; 904) consistant à faire établir par l'unité de commande l'alimentation de l'ensemble de ladite pluralité d'unités d'option en réponse au relâchement ordonné; et
une troisième étape de commande (405, 409; 805, 809; 906, 911, 916) consistant à faire démarrer successivement par l'unité de commande ladite pluralité d'unités d'option selon un ordre prédéterminé après que l'unité de commande a établi l'alimentation de l'ensemble de ladite pluralité d'unités d'option lors de la deuxième étape de commande, par l'envoi d'un signal d'instruction de l'unité de commande à ladite pluralité d'unités d'option, respectivement, par l'intermédiaire d'une ligne de communication.

9. Procédé selon la revendication 8, comprenant de plus une étape de démarrage d'opération de formation d'image en parallèle avec une start-up d'une autre unité d'option, après l'achèvement du démarrage de l'une de ladite pluralité d'unités d'option selon l'ordre prédéterminé.

10. Procédé selon la revendication 8 ou 9, l'appareil de formation d'image comprenant de plus au moins deux unités de convoyage de feuille détachables constituant ladite pluralité d'unités d'option.

11. Procédé selon la revendication 10, dans lequel lesdites au moins deux unités de convoyage de feuille détachables comprennent une unité d'avance de feuille et une unité d'éjection de feuille disposée en aval de ladite unité d'avance de feuille, et dans lequel un ordre de démarrage supérieur à celui de ladite unité d'éjection de feuille est attribué à ladite unité d'avance de feuille.

12. Procédé selon la revendication 10 ou 11, dans lequel lesdites au moins deux unités de convoyage de feuille détachables comprennent une pluralité d'unités d'avance de feuille qui peuvent être empilées et reliées les unes aux autres, et dans lequel, en ce qui concerne ladite pluralité d'unités d'avance de feuille qui sont empilées et reliées, un ordre de démarrage supérieur à celui d'une unité d'avance de feuille d'amont est attribué à une unité d'avance de feuille d'aval.

13. Procédé selon la revendication 11 ou 12, dans lequel ladite unité d'éjection de feuille comprend une unité de convoyage duplex pour retourner une feuille, une première surface de la feuille ayant une image formée sur celle-ci.

14. Procédé selon l'une quelconque des revendications 8 à 13, dans lequel l'ordre prédéterminé correspond à des conditions de formation d'image.
